# EUROPEAN PATENT APPLICATION

(11) **EP 1 867 231 A2**
(43) Date of publication of application: **19.12.2007**
(21) Application number: 06116678.1
(22) Date of filing: 05.07.2006
(51) Int. Cl.: A21B 3/13

(54) **Baking form with release material laminated on the interior surface**

(30) Priority: 13.06.2006 US 813064
(71) Applicant: Saint-Gobain Performance Plastics Pampus Gmbh, 47877 Willich (DE)
(72) Inventor: Cazaly, Brian, 41334 Nettetal (DE); Eversdijk, Peter, 4465 BA Goes (NL); Breinig, Ernst, 51789 Lindlar (DE)
(74) Representative: Cohausz & Florack

(57) **Abstract**

A container for use in baking dough into a food product includes an interior surface that defines a three dimensional space configured to contain the dough. The container also includes a structural material and a food grade fluoropolymer material. The food grade fluoropolymer is laminated on the interior surface. The container may be formed in the shape of a box for baking a loaf of bread. The container may be formed through non-contact techniques designed to avoid altering the fluoropolymer laminated to the interior surface. The container may be part of a baking system that includes multiple boxes attached to a brace.

## Description

### BACKGROUND

Bread products such as loaves of bread are often baked in metal baking boxes, the loaf of bread conforming to the shape of the box. During baking, components of the bread dough may have a tendency to stick to the base and/or sides of the baking box. Thus, methods have been developed to create a slick surface from which the bread product will release.

One method of creating a slick surface developed early on was to apply external release agents such as oil to the interior surface of the baking box before each loaf of bread was created. This method tends to be expensive and create an additional mess.

Other methods of creating a slick surface focused on using materials that had inherent slickness to form the interior surface of the baking box. One such method was to use a coating of silicone rubber on the interior surface of the box. However, silicone rubber does not provide ideal release of bread products baked in a baking box.

Another method using materials with inherent slickness which is common in the baking industry is spray coating the interior surface of the box with polytetrafluoroethylene (PTFE), perfluoroalkoxy polymer resin (PFA), or fluoroethylenepropylene (FEP). Spray coated boxes tend to have a layer of PTFE that is about 0.03 to 0.05 mm thick on the interior surface of the box, although the thickness may tend to vary over the interior surface due to variations caused by the spraying technique.

While popular, spray coated PTFE baking boxes tend to have disadvantages. The thickness of a spray coated PTFE baking box may be limited as cracking may tend to occur as the thickness of the spray coating increases. On the other hand, with thinner coatings the release material does not tend to last as long; the PTFE layer may potentially peel or flake off.

### SUMMARY

A baking box with improved release may tend to avoid the disadvantages of the prior solutions. According to many embodiments, an improved baking box may tend to provide one or more advantages over prior solutions such as providing a release material with a longer life span, providing a surface that is substantially smooth, providing a surface that provides good releasability for bread products, avoiding the need for messy oils, etc.

According to many embodiments, an improved baking box has an interior surface formed from a fluoropolymer (e.g. PTFE) laminated on a structural material (e.g. the metal frame of the baking box).

One embodiment provides a container for baking bread. The container has an interior surface that defines a three dimensional space configured to contain bread dough. The container includes a structural material and a release material. The release material is on the interior surface and comprises a laminated fluoropolymer.

Another embodiment provides a container for baking bread. The container includes a base and side walls. The base and side walls are formed from a metallic structural material and a food grade PTFE material laminated to the metallic structural material. The base and the side walls define a three dimensional space configured to contain bread dough, and the PTFE release materials are placed on the interior surfaces of the space.

Another embodiment provides a container for baking bread. The container has an interior surface that defines a three dimensional space configured to contain bread dough. The container includes a structural material and a laminated release material, the laminated release material forming at least part of the interior surface.

Another embodiment provides a container for baking bread. The container has an interior surface that defines a three dimensional space configured to contain bread dough. The container includes a metallic structural material and a food grade release material on the interior surface. The release material is substantially smooth.

Another embodiment is directed to a system for baking bread. The system would include a brace that is connected to a plurality of containers that are constructed according to any of the embodiments discussed above.

Another embodiment is directed to a method for baking bread. The method includes baking the bread in a container or system that is constructed according to one of the embodiments described above.

### BRIEF DESCRIPTION OF THE DRAWINGS

Fig. 1 is a diagram of a baking system for baking loafs of bread using containers constructed according to one embodiment;

Fig. 2 is a diagram of a baking system for baking loafs of bread using containers constructed according to the embodiment of Fig. 1;

Fig. 3 is a side-view cross-section of a base of a baking box of the baking system of Fig. 1;

Fig. 4 is a flow chart of a method for baking bread; and

Fig. 5 is a flow chart of a method of forming a baking system.

Fig. 6 is a more detailed flow chart of an exemplary method of forming a baking system according to the embodiment of Fig. 5

Fig. 7 is a component view of a baking box according to the embodiment of Fig. 1;

Figs. 8 and 9 are side views of a system for connecting a baking box to a brace; and

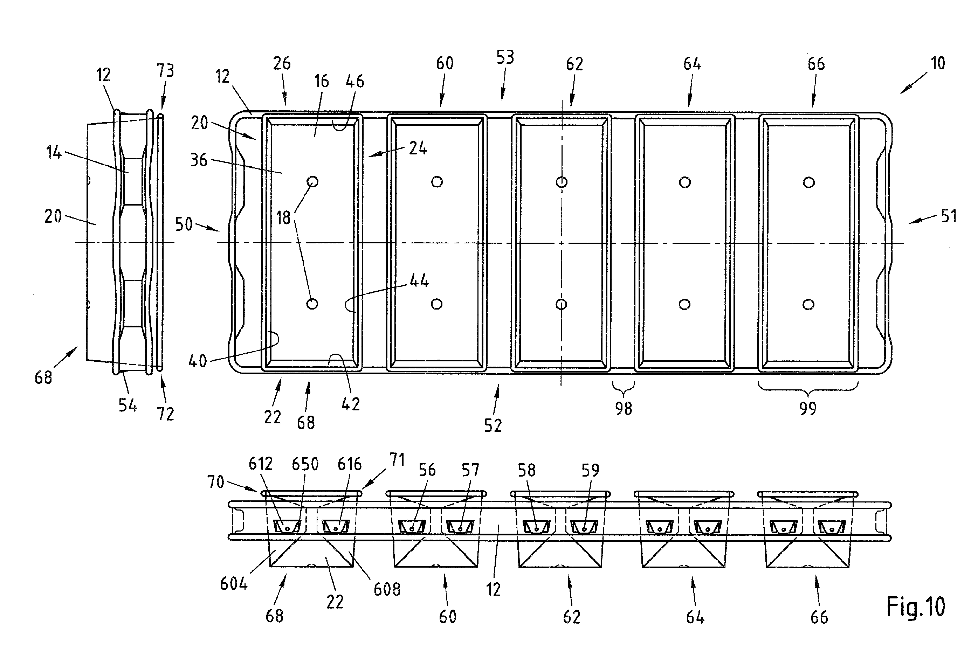

Fig. 10 is a three-part view of a baking system according to the embodiment of Fig. 1.

### DETAILED DESCRIPTION OF EXEMPLARY EMBODIMENTS

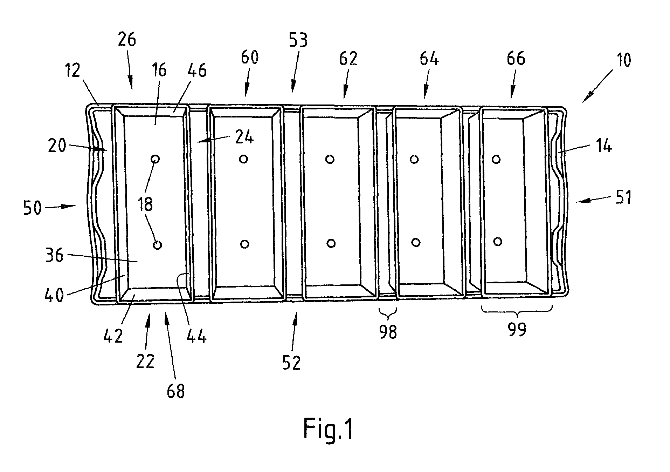

Referring to Fig. 1, a system 10 for baking loaves of bread includes a brace 12 and multiple baking boxes 60-68 connected to the brace 12. Brace 12 includes a first side (long side 52, 53) that is longer than a second side (short side 50, 51). Short sides 50, 51 may include indentations 14.

Baking box 68 is exemplary of the baking boxes 60-68 connected to brace 12. While baking boxes 60-68 are substantially the same in the illustrated embodiment, they could be different (e.g. different shapes, different sizes, constructed from different materials, etc.). In some embodiments at least two or at least four baking boxes will be connected to brace 12. In some of these embodiments, at least five or at least ten baking boxes will be connected to brace 12. In some embodiments, up to thirty or up to twenty baking boxes will be connected to brace 12. In some of these embodiments, up to sixteen or up to ten baking boxes will be connected to brace 12. In the illustrated embodiment, five baking boxes are connected to brace 12.

As illustrated, the space 98 between baking boxes 60-68 is less than the width 99 of the baking boxes 60-68. In some embodiments, the space 98 may be less than half the size of the width 99. In some of these embodiments, the space 98 may be less than about one-third the size of the width 99. While not illustrated, in other embodiments the space 98 may be at least as large as the width 99.

Baking boxes according to the present disclosure can come in any size. Size of a baking box for baking bread may be generically measured based on the approximate weight of bread which may be baked in the baking box. Some potential sizes, in terms of bread weight, for a baking box include about 330 g, about 500 g, about 750 g, and about 1000 g. According to some embodiments, the baking box for baking loaves of bread has a size, measured in terms of weight of a loaf of bread, of at least about 250 g or at least about 400 g. According to some of these embodiments, the baking box has a size of at least about 650 g or 800 g. According to some embodiments, the baking box has a size of no more than about 2 kg or 1 kg. According to some of these embodiments, the baking box has a size of no more than about 800 g or 600 g. According to still other embodiments, the baking box has a size of no more than about 400 g.

Baking box 68 includes a rectangular base 16 having dimples 18 and four rectangular side walls 20-26. While shown as rectangular, the base 16 and side walls 20-26 could take any number of shapes. Further, base 16 and side walls 20-26 could be formed from a single piece of material or may be formed from separate pieces of material joined together. When limited to being formed from separate pieces of material, base 16 and side walls 20-26 shall be referred to as "separate."

Base 16 is shown as distinct from side walls 20-26 which are, in turn, distinct from each other. In other words, base 16 is identifiable separate from side walls 20-26 and side walls 20-26 are distinguishable from each other. In some embodiments, base 16 and or side walls 20-26 may be formed in a shape (e.g. curved shapes such as truncated cones or spheres) such that base 16 and side walls 20-26 run together and may not be separately identifiable. When limited to shapes that provide distinct side walls and/or bases, such structures shall be referred to as "distinct."

In embodiments where sidewalls are distinct from the base, one or more of the sidewalls may be at an angle to the base that approaches perpendicular. In some embodiments, the angle is within 35 degrees or 20 degrees of perpendicular. In some of these embodiments, the angle is within 15 degrees or 10 degrees of perpendicular. Where the angle approaches perpendicular, the angle may actually be substantially perpendicular. In these cases, the baking boxes 60-68 may be formed as rectangular boxes. The rectangular boxes may have a top profile (viewing from the top into the baking box) that is square or may have a top profile that is not square. If the angle is only slightly not perpendicular, the rectangular box may partly resemble a highly truncated pyramid. However, in some embodiments, the angle may approach perpendicular but not actually be perpendicular. For example, the baking boxes 60-68 could have a shape resembling a truncated pyramid.

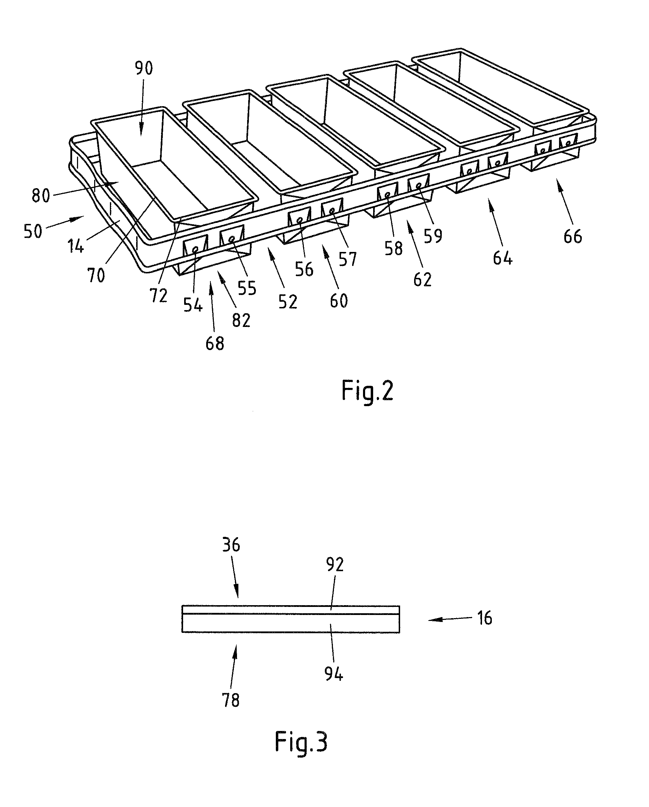

Base 16 and side walls 20-26 define a three-dimensional space 90 (Fig. 2). Baking box 68 is configured to contain bread dough in space 90. In the illustrated embodiment, such bread dough can be used to form loaves of bread.

In baking box 68 as illustrated, side walls 20, 24 define the long sides of baking box 68 and side walls 22, 26 define the short sides of baking box 68.

Each of base 16 and side walls 20-26 include interior surfaces 36, 40-46 facing space 90. Each of surfaces 36, 40-46 is covered with a release material 92 (Fig. 3). Referring to Fig. 3, release material 92 (e.g. a fluoropolymer such as PTFE) is laminated directly to the structural material 94 (e.g. a metal sheet such as steel, including zinc plated chromated steel, aluminum, etc.). Structural material 94 and release material 92 may be formed from one or more components and may include more than one layer of components. Structural material 94 may be selected to be a heat conductive material such as a metal sheet (e.g. a steel sheet - including zinc plated chromated steel, an aluminum sheet, etc.).

Release material 92 forms the interior surface of base 16 while structural material 94 forms the exterior surface 78 of base 16 (see also exterior surfaces 80, 82 - Fig. 2 - of side walls 20, 22 - Fig. 1).

In many embodiments, release material 92 (such as a PTFE material) may be substantially smooth. Spray coated materials tend to leave bumps on the surface that can be felt by touch. Laminated release materials according to the present disclosure, on the other hand, may be configured to be substantially even across the surface 36 giving them a feeling of being substantially smooth.

In some embodiments, release material 92 may have a thickness of at least about 0.07 or 0.1 mm. According to some of these embodiments, release material 92 may have a thickness of at least about 0.15 mm. If release material 92 includes a PTFE material, the PTFE material may have a thickness of at least about 0.07 or 0.1 mm. According to some of these embodiments, the PTFE material may have a thickness of at least about 0.15 mm.

In some embodiments, release material 92 may have a thickness of up to about 1.0 or 0.5 mm. According to some of these embodiments, release material 92 may have a thickness of up to about 0.4 or 0.3 mm. If release material 92 includes a PTFE material, the PTFE material may have a thickness of up to about 1.0 or 0.5 mm. According to some of these embodiments, the PTFE material may have a thickness of up to about 0.4 or 0.3 mm.

Fluoropolymers may include, but are not limited to, the group known as TFE polymers. This group includes polytetrafluoroethylene (PTFE), and copolymers of TFE (modified PTFE). The modifying monomer can be, for example, HFP, PPVE, perfluorobutyl ethylene (PFBE), chlorotrifluoroethylene (CTFE), or other monomer that introduces side groups into the molecule. The concentration of such modifiers is may be less than 1 mol %. The PTFE resins of this invention include both those derived from suspension polymerization (granular resin) and from emulsion polymerization (fine powder or coagulated dispersion resin). The group of TFE polymers also includes melt-fabricable copolymers of TFE. Such copolymers may have melt viscosity in the range 0.5 x 10³ to 60 x 10³ Pa.s, but viscosities outside this range are known. Comonomers with TFE can include perfluoroolefins, PAVE, and ethylene (E), for example. When the comonomer is E, a third monomer may be used, such as PFBE or PPVE.

Other exemplary fluoropolymers include CTFE polymers including E/CTFE copolymers and vinylidene fluoride (VF₂) polymers including homopolymers and VF₂ copolymers with perfluoroolefins. Further, examples of fluoropolymers include FEP, PFA, ETFE, PFA, MFA, and PVDF.

Referring to Fig. 2, the short sides of baking boxes 60-68 are connected to long sides 52 of brace 12. Baking boxes 60-68 may be fixed to brace 12 by fasteners 54-59. For example, baking box 68 may be connected by fasteners 54, 55 in two (as illustrated) or more locations. Alternatively, baking box may be fixed to brace 12 by other means of connection such as adhesives or by stamping long side 52 of brace 12 out of the same sheet as side wall 22 of baking box 68. Baking box 68 could also be removably connected to brace 12 by a removable means of connection such as a slot and pin combination.

Sidewalls 20-26 (Fig. 1) of baking box 68 may also have lips 70, 72, may include other materials, and may include other structures.

While baking box 68 is shown as open, baking box 68 could be enclosed by a lid or have any other structure not excluded by the baking requirements.

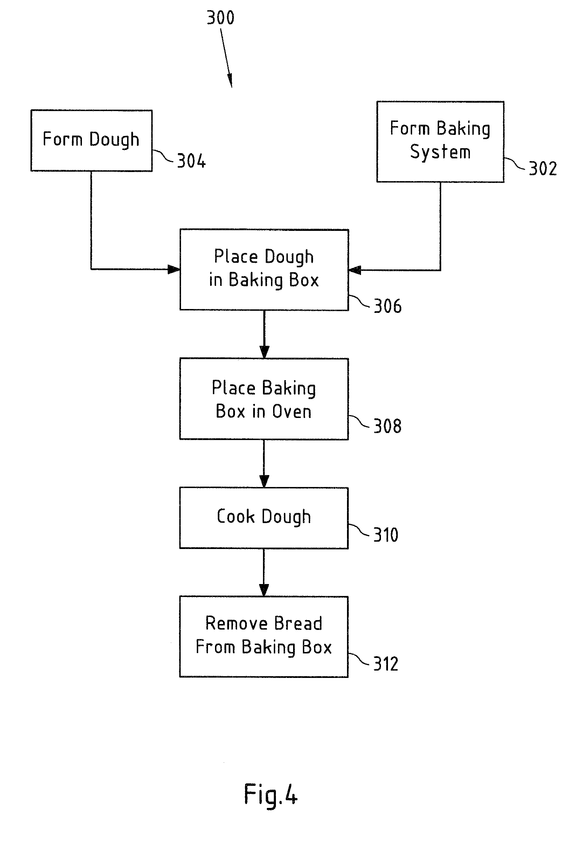

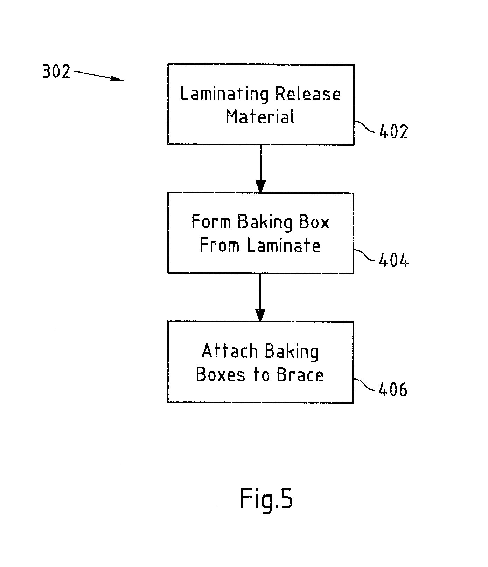

Referring to Fig. 4, bread products may be formed using baking system 10 (Fig. 1). The bread products that can be made are numerous. However, as some examples, baking system 10 may be used to form loaves of bread such as white bread, brown bread, full corn bread, raisin bread, and/or currant bread. As a preliminary matter, the baking box must be created in block 302 (described in Fig. 5).

Referring to Fig. 5, the method for forming the baking box at block 302 includes laminating the release material 92 (Fig. 3) at 402. In many embodiments, the release material is directly laminated onto the structural material 94 (Fig. 3) of a baking box. In some embodiments, this would mean directly laminating a fluoropolymer release layer (e.g. PTFE) onto a metal sheet (e.g. zinc-plated chromated steel). For a discussion of laminating a fluoropolymer to a metal, see European Patent 0394518. The fluorpolymer release layer may be formed from PTFE. The PTFE material may include only PTFE or may include other components such as fillers, pigments, etc.

In some embodiments, the release (esp. fluoropolymer) layer includes a pigment (pigment including both dyes and pigments unless stated otherwise in a claim). The pigment may be substantially black (i.e. is black or is a dark color which is close to resembling black, such as a dark navy blue). In many embodiments, the pigment is a black pigment. In some embodiments, this may mean including a black pigment in a PTFE or other fluoropolymer material.

Since the baking box is used to cook food products, the release material and the components of the release material (e.g. fluoropolymer, fillers, pigments, etc) should be food grade components (i.e. approved for use in materials that contact food). The FDA publishes guidelines for determining whether products are approved for contact with food.

It should be noted that in this method, the release material is added to the structural material prior to forming the structural material into the baking box.

Once the laminated materials are formed, they are used to form a baking box at 404. In many embodiments, this will mean forming the box from metal sheets which have been laminated with a fluoropolymer. This process may be difficult to accomplish with standard techniques. In particular, standard bending and/or welding techniques may tend to modify the fluoropolymer (PTFE) layer such that the fluoropolymer is no longer substantially smooth (i.e. may lose some of its beneficial ability to release bread products) due to cracking and/or deformation.

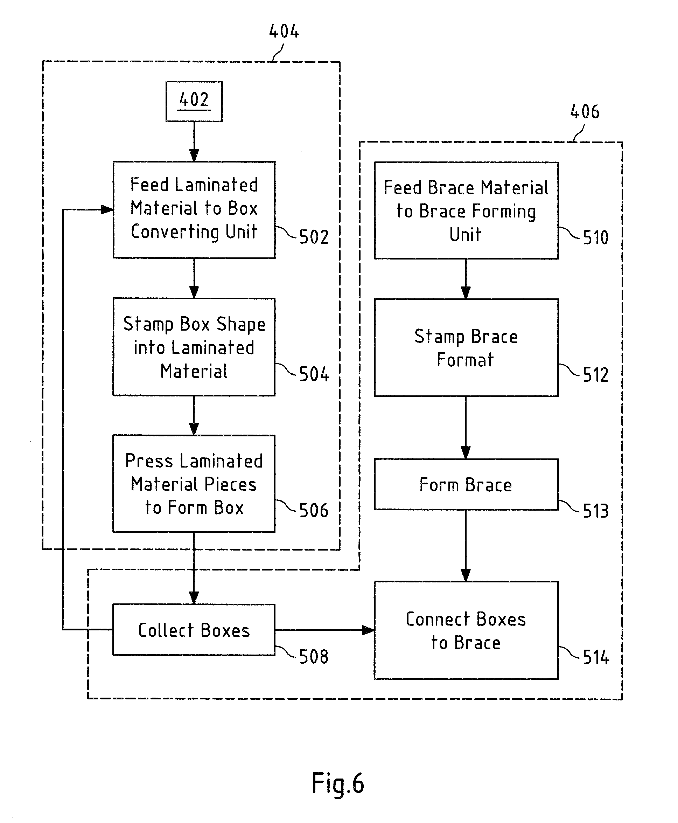

To be able to create bread boxes from PTFE laminated metal sheets, special non-contact techniques have been developed. These techniques are directed to a process where the release material is attached prior to forming the enclosure. Referring to Fig. 6, one method of forming baking boxes at block 404 includes feeding the pre-formed (pre-laminated) material to a box converting unit at block 502. The pre-formed material may be fed in the form of a roll of material.

The box forming unit may then stamp the box shape in block 504. Stamping the box shape may include stamping in grooves configured to cooperate with other pieces of the box such that the other pieces will properly mate with the stamped piece. Stamping the box shape could include stamping the entire box shape into a single piece of material, or could include stamping the shape of one portion of the box (e.g. a sidewall, base, etc.) into the material. In embodiments where the box will be attached to a brace at block 514, stamping the box at block 504 may also include forming grooves and/or pins in the lips of the sidewall pieces, which grooves and/or pins may be configured to mate with corresponding pieces of the brace.

After the pieces are stamped with the box shape at block 504, the box pieces are joined at block 506. Forming the box may include taking up the sidewalls and base of the box by means of suction cups. The pieces may then be pressed together using air pressure to compress the pieces. The pieces that are pressed together may include lips which may not ordinarily configured to contain bread dough. These lips may be welded together. These lips can be formed at the intersection of any of the pieces of the box, only around the mouth (opening) of the box, etc.

Referring back to Fig. 5, in some embodiments, one or multiple baking boxes can be attached to a brace at 406. As discussed above, various numbers of baking boxes may be connected to the brace by any number of techniques. For example, the short sides of five rectangular box shaped baking boxes may be fixed to the long side of a rectangular shaped brace using fasteners. In other embodiments, block 406 may be omitted.

Referring to Fig. 6, attaching baking boxes to a brace at block 406 may include collecting multiple boxes at block 508. The boxes may all be formed using the process described at block 404 and may all include a laminated release material. In other embodiments, one or more boxes are formed from a laminated material and/or using the technique at block 404 while other baking boxes may be formed using conventional or other techniques and/or materials.

Before the boxes can be connected to a brace at block 514, the brace is formed in blocks 510 and 512. Forming the brace includes feeding the brace material to a brace forming unit at block 510 and stamping the brace format at block 512. Stamping the brace format at block 512 may comprise including structures in the brace to mate with structures in the boxes. For example, the brace may include holes configured to mate with pins in the box (or vice versa), may include projections to mate with grooves in the box, etc.

Once the brace structure is stamped at block 512, the brace may be formed at block 513. Forming the brace structure may simply comprise connecting ends of the brace together or taking the stamped piece as it is formed in block 512. If the ends are connected, they may be connected by any number of means such as welding, fasteners, etc. Additionally, structures may be welded or otherwise fixed to the brace to allow boxes to be connected to the boxes.

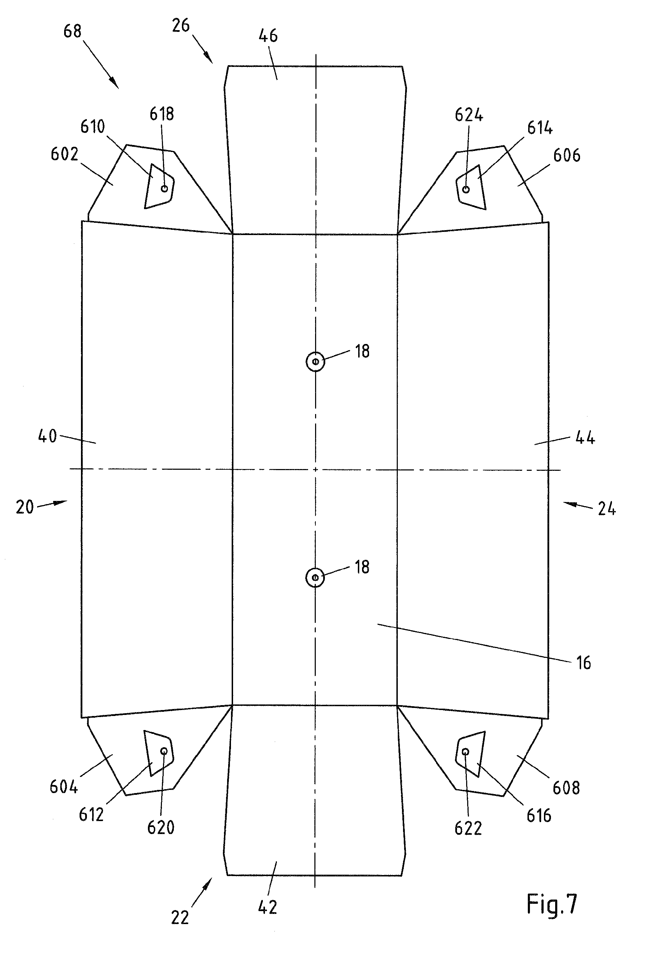

Once the braces are formed at block 513, the boxes are connected to the brace at block 514. Because some standard techniques of connecting boxes to a brace may tend to cause deformation of the release material, such that the release material will lose its smoothness and releasability, care should be taken with most embodiments of the boxes when connecting the boxes to the brace. As discussed above, multiple unique structures may be included in the box and/or brace to allow the boxes to be connected to brace. One example of a structure for connecting the boxes to the brace may be seen in Figs. 7-9.

Referring to Fig. 7, baking box 60 includes wings 602-608 connected to side walls 20, 24. Wings 602-608 include pins 610-616. Pins 610-616 may be punched out of a common material as wings 602-608 or may be attached after wings 602-608 are formed. Each of pins 610-616 include s a hole 618-624. When the box 60 is put together at block 506 (Fig. 6), wings 602, 606 are configured to fold behind side wall 26 and wings 604, 608 are configured to fold behind side wall 22.

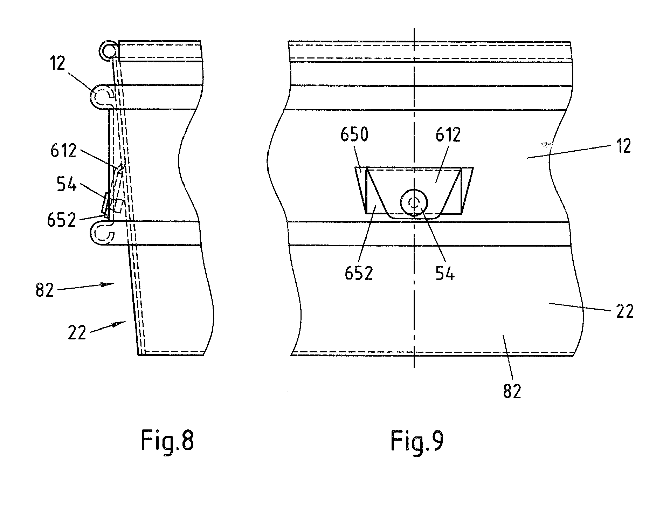

Referring to Figs 8 and 9, pin 612 extends through a slot 650 in brace 12. A fastener 54 can be used to attached pin 612 to a portion 652 of brace 12.

Referring back to Fig. 4, once the baking system is formed at block 302 it can be used to bake bread products. First, the dough needs to be formed at block 304. The type of dough to be formed can be varied as desired. In many embodiments, the baking box may be designed for use in making loaves of bread so that a bread dough may be formed. Examples of types of bread that can be formed include white bread, brown bread, full corn bread, raisin bread, and/or currant bread. Of course, any number of other types of bread could be formed using the baking box.

Once the dough is formed at block 304 and the baking system is formed at block 302, the dough can be placed in a baking box of the baking system at block 306. The baking system (which may be a single baking box) is then placed in an oven at block 308, and the dough is baked at block 310. In an exemplary embodiment, the oven may be set at 240 degrees Celsius and the bread dough may be baked for 35 minutes. Other temperatures and times could also be used. In some embodiments, the temperature in a baking box containing dough would be under 100 degrees Celsius.

In some embodiments, the temperature of the oven is at least 100 or 150 degrees Celsius. According to some of these embodiments, the temperature of the oven is at least 200 or 300 degrees Celsius. According to some embodiments, the temperature of the oven is no more than about 400 or 350 degrees Celsius. According to some of these embodiments, the temperature is no more than about 300 degrees Celsius.

In some embodiments, the dough is baked for at least 15 or 25 minutes. In some of these embodiments, the dough is baked for at least 30 minutes. In some embodiments the dough is baked for up to about 60 or 50 minutes. In some of these embodiments, the dough is baked for no more than about 40 or 30 minutes.

Once the bread is cooked, it is removed from the baking box at block 312. The cooked bread may be removed by tipping. In some embodiments the bread is removed by a method that does not require human action. One method may be by using suction, such as using suction cups. Another method may be based on lifting the bread, such as impaling the bread with a nail/pin system and lifting the bread using the nail/pin system.

One advantage of a baking box made according to many embodiments of the present disclosure may be an improved release of at least some types of bread from the baking boxes. It has been observed that PTFE spray coated baking boxes have been unable to successfully release certain types of bread products with consistency, while PTFE laminated boxes according to the present disclosure have had consistent successful releases. The release is successful when the surface of the bread which had contact to the interior surface of the baking box is not damaged when the bread is removed from the baking box. Anything else is not successful (i.e sticks to the baking box).

In particular, it has been observed that certain PTFE spray coated baking boxes have difficulty with certain currant breads while PTFE laminated baking boxes do not. Thus, at least some baking boxes have strong releasability. According to the present application, "strong releasability" means being able to repetitively release a currant bread successfully for at least fifty consecutive trials where a conventional PTFE spray coated baking box and silicone rubber coated baking boxes are unable to release that same currant bread for fifty consecutive trials without the use of external release agents (e.g. oil). In some embodiments, the baking box could have strong releasability for over 100 or more trials.

It has also been observed that certain PTFE spray coated baking boxes have difficulty with certain raisin breads when not pre-coated with oil while PTFE laminated baking boxes do not have difficulty releasing those raisin breads. Some baking boxes according to this application may be able to repetitively release a raisin bread successfully for at least fifty consecutive trials where a conventional PTFE spray coated baking box and silicone rubber coated baking boxes are unable to release that same raisin bread for fifty consecutive trials. In some embodiments, the baking box could be able to release that raisin bread for over 100 or more trials.

Exemplary Embodiments

One embodiment is directed to a container for use in baking dough into a food product. The container comprises an interior surface that defines a three dimensional space configured to contain the dough, and a food grade fluoropolymer material laminated on the interior surface.

Another embodiment provides a container for baking bread. The container comprises a base formed from a metallic structural material and a food grade polytetrafluoroethylene material laminated to the metallic structural material. The release material being on an interior surface of the base. The container also comprises side walls formed from a metallic structural material and a food grade polytetrafluoroethylene material laminated to the metallic structural material of the side walls. The release material is on an interior surface of the side walls. The base and the side walls define a three dimensional space configured to contain a bread dough. The interior surfaces of the side walls and the base face the three dimensional space.

Another embodiment provides a container for baking bread. The container has an interior surface that defines a three dimensional space configured to contain a bread dough. The container comprises a structural material and a food grade laminated release material. The laminated release material forms at least part of the interior surface.

Another embodiment provides a container for baking bread. The container has an interior surface that defines a three dimensional space configured to contain a bread dough. The container comprises a metallic structural material and a food grade release material on the interior surface. The release material has strong releasability.

A number of containers according to the exemplary embodiments above may have additional structural and compositional limitations. For example, a fluropolymer may comprise PTFE; a fluoropolymer may be laminated to the structural material; the container may include a structural material, which may be a metal; a three dimensional space may substantially define a box shape, such as a rectangular box shape; containers having rectangular box shapes may have non-square shapes; the container may comprise a distinct base and a plurality of distinct side walls, which may include four distinct walls. As other examples, a release material may include a substantially black pigment; a fluorpolymer release material may have a thickness of at least about 0.1 mm, a fluorpolymer release material may have a thickness of up to about 0.5 mm, the release material may have strong releasability, and the container may be configured to release currant-based breads without the use of oil. Other limitations that may be included in the exemplary embodiments may be determined by reference to the disclosure made with respect to the figures, above.

Another embodiment is directed to a baking system that comprises a brace and a plurality of containers attached to the brace. The containers can be formed according to any of the exemplary embodiments discussed above. In some embodiments, at least three containers are attached to the brace. In some embodiments, the brace includes 3 to 16 containers attached to the brace. The containers may all be constructed according to the exemplary embodiments above, or less than all of the containers may be constructed in that manner. The containers according to this embodiment may be fixed to the brace, as discussed above.

Another embodiment is directed to a method of baking bread. The method comprises placing bread dough in a container (which may include containers of multi-container baking system) that is constructed according to one of the embodiments described above. The method also includes placing the container containing the bread dough in an oven such that the bread dough forms a bread product. The bread product is removed from the container.

Methods according to this exemplary embodiment may include any number of limitations and/or variations. For example, the bread dough may be a dough for a loaf of a bread having currants. In this example, removing the bread product from the container may include removing the bread product from the container without having currants stuck to the interior surface. As another example, placing the container containing the bread dough in an oven may comprise placing the container containing the bread dough in an oven such that the bread dough forms a loaf of bread. While described with respect to baking loaves of bread, this same method may be used to form other dough-based food products.

Another embodiment is directed to a method for forming the container according to the embodiments described above. The method includes collecting a plurality of laminated metal sheets, and joining the plurality of laminated metal sheets to form the container using non-contact techniques. The non-contact techniques may include using suction cups to hold the laminated metal sheets. The non-contact techniques may include using air pressure to compress the laminated metal sheets together. The non-contact techniques may also include forming recesses or other shapes in the metal sheets to aid in connecting the laminated metal sheets together.

Another embodiment is directed to a method for forming a container according to one or more of the embodiments described above. The method includes applying a release material, and forming a baking box from a plurality of pieces. The release material is applied before the baking box is formed from the pieces.

Another embodiment is directed to a method for forming a container according to one or more of the embodiments described above. The method includes applying a release material, and forming a baking box from a sheet of structural material. The release material is applied to the structural material before the baking box is formed from structural material.

The invention has been described with reference to various specific and illustrative embodiments and techniques. However, it should be understood that many variations and modifications may be made while remaining within the spirit and scope of the invention. For example, while much of the discussion has related to loaves of bread, other dough-based baking products (particularly products which are used to define the three-dimensional shape of the product - such as cake or brownie pans) can be formed according to the disclosure of the present application.

## Claims

1. A container for use in baking dough into a food product, the container comprising:
- an interior surface that defines a three dimensional space configured to contain the dough;
- a structural material; and
- a food grade fluoropolymer material laminated on the interior surface.

2. The container for baking dough of claim 1, wherein the fluropolymer comprises polytetrafluoroethylene.

3. The container for baking dough of claim 1 or 2, wherein the fluoropolymer is laminated to the structural material.

4. The container for baking dough of any one of claims 1 to 3, wherein the structural material comprises a metal.

5. The container for baking dough of any one of claims 1 to 4, wherein the three dimensional space defines a shape that is substantially a box.

6. The container for baking dough of any one of claims 1 to 5, wherein the container comprises a distinct base and a plurality of distinct side walls.

7. The container for baking dough of any one of claims 1 to 6, wherein the fluoropolymer material comprises a substantially black pigment.

8. The container for baking dough of any one of claims 1 to 7, comprising a base and four distinct side walls that define the three-dimensional space.

9. The container for baking dough of any one of claims 1 to 8, wherein the fluoropolymer material has a thickness of at least about 0.1 mm.

10. The container for baking dough of any one of claims 1 to 9, wherein the fluoropolymer material has a thickness of up to about 0.5 mm.

11. The container for baking dough of any one of claims 1 to 10, wherein the fluoropolymer material has strong releasability.

12. The container for baking dough of any one of claims 1 to 11, wherein the container is configured to consistently release currant-based breads without the use of oil.

13. A container for baking bread comprising :
- a base comprising a metallic structural material and a food grade polytetrafluoroethylene release material laminated to the metallic structural material, the release material being on an interior surface of the base; and
- side walls comprising a metallic structural material and a food grade polytetrafluoroethylene release material laminated to the metallic structural material, the release material being on an interior surface of the side walls;
wherein the base and the side walls define a three dimensional space configured to contain a bread dough, the interior surfaces of the side walls and the base facing the three dimensional space.

14. The container for baking bread of claim 13 , wherein the three dimensional space defines a shape that is substantially a rectangular box.

15. The container for baking bread of claim 13 or 14, wherein the base is a distinct base and the side walls are distinct side walls.

16. The container for baking bread of any one of claims 13 to 15 to, wherein the release material comprises a substantially black pigment.

17. The container for baking bread of any one of claims 13 to 16, wherein the fluoropolymer release material has a thickness of about 0.1 to about 0.5 mm.

18. A container for baking bread comprising an interior surface that defines a three dimensional space configured to contain a bread dough, the container further comprising a structural material and a laminated release material, the laminated release material forming at least part of the interior surface.

19. A system for baking bread comprising:
- a brace;
- a first container attached to the brace, the first container comprising an interior surface that defines a three dimensional space configured to contain a bread dough, the first container comprising a metallic structural material, and a laminated release material along the interior surface of the first container;
- a second container attached to the brace, the second container comprising an interior surface that defines a three dimensional space configured to contain a bread dough, the second container comprising a structural material, and a laminated release material along the interior surface of the second container; and
- a third container attached to the brace, the third container comprising an interior surface that defines a three dimensional space configured to contain a bread dough, the third container comprising a structural material, and a laminated release material along the interior surface of the third container.

20. A method of baking bread comprising:
- forming a bread dough;
- placing the bread dough in a container comprising an interior surface that defines a three dimensional space configured to contain the bread dough, the container comprising a metallic structural material, and a laminated release material along the interior surface;
- placing the container containing the bread dough in an oven such that the bread dough forms a bread product; and
- removing the bread product from the container.

21. The method of claim 20, further comprising:
- placing the bread dough in a plurality of separate containers connected to a common brace, the containers comprising interior surfaces that define three dimensional spaces configured to contain the bread dough, the containers comprising metallic structural materials, and laminated release materials along the interior surfaces;
wherein placing the container containing the bread dough in an oven comprises placing the brace connected to the plurality of containers in the oven.

22. The method of claim 20 or 21, wherein the bread dough is a dough for a loaf of a bread having currants.

23. The method of any one of claims 20 to 22, wherein removing the bread product from the container comprises consistently removing bread products from the container without having currants stuck to the interior surface.

24. The method of any one of claims 20 to 23, wherein placing the container containing the bread dough in an oven comprises placing the container containing the bread dough in an oven such that the bread dough forms a loaf of bread.

25. A container for baking bread comprising a container having an interior surface that defines a three dimensional space configured to contain a bread dough, the container comprising a metallic structural material and a food grade release material on the interior surface, the release material having strong releasability.

26. The container for baking bread of claim 25, wherein the release material comprises polytetrafluoroethylene.

27. The container for baking bread of any one of claims 25 to 26, wherein the release material is laminated to the structural material.

28. The container for baking bread of any one of claims 25 to 27, wherein the three dimensional space is substantially a non-square rectangular box.

29. The container for baking bread of any one of claims 25 to 28, wherein the release material comprises a substantially black pigment.

30. The container for baking bread of any one of claims 25 to 29, wherein the release material comprises a fluoropolymer material having a thickness of about 0.1 to 0.5 mm.

31. A container for baking bread comprising an interior surface that defines a three dimensional space configured to contain a bread dough, the container further comprising a structural material and a food grade laminated release material, the laminated release material forming at least part of the interior surface.

32. The container of claim 31, wherein the release material comprises a fluoropolymer.

33. The container of claim 32, wherein the fluoropolymer comprises polytetrafluorethylene.

34. The container of any of claims 31 to 33, wherein the structural material comprises a metallic structural material.

35. The container of any of claims 31 to 34, wherein the three dimensional space defines a shape that is substantially a rectangular box.

36. The container of any of claims 31 to 35, wherein the release material comprises a substantially black pigment.

37. The container of any of claims 31 to 36, wherein the release material comprises a fluorpolymer release material having a thickness of at least about 0.1 mm.

38. The container of any of claims 31 to 37, wherein the release material has strong releasability.

39. A baking system using the container according to any of claims 31 to 38, comprising a brace connected to the container and a plurality of additional containers configured to contain bread dough.

40. A method for making bread using the baking system according to claim 39, comprising:
- forming a bread dough;
- placing the bread dough in the container and the plurality of additional containers;
- placing the container containing the bread dough in an oven such that the bread dough forms a bread product; and
- removing the bread product from the container.

41. A method for making bread using the container according to one of claims 31-38, comprising:
- forming a bread dough;
- placing the bread dough in the container;
- placing the container containing the bread dough in an oven such that the bread dough forms a bread product; and
- removing the bread product from the container.

42. A method for forming the container according to claims 31 to 38, comprising collecting a plurality of laminated metal sheets; and joining the plurality of laminated metal sheets to form the container.

43. The method of claim 42, wherein joining the plurality of laminated metal sheets to form the container comprises joining the plurality of laminated metal sheets to form the container using non-contact techniques.
